Europäisches Patentamt

European Patent Office

Office européen des brevets

(19)

(11) **EP 0 680 632 B1**

(12) **EUROPEAN PATENT SPECIFICATION**

(45) Date of publication and mention
of the grant of the patent:
**03.12.2003 Bulletin 2003/49**

(21) Application number: **94909469.2**

(22) Date of filing: **12.01.1994**

(51) Int Cl.$^7$: **G06F 1/26**

(86) International application number:
**PCT/US94/00684**

(87) International publication number:
**WO 94/016378 (21.07.1994 Gazette 1994/17)**

(54) **POWER MANAGEMENT SYSTEM FOR COMPUTER DEVICE INTERCONNECTION BUS AND METHOD THEREFOR**

LEISTUNGSVERWALTUNGSSYSTEM FUER RECHNERVORRICHTUNGSZWISCHENVERBINDUNGSBUS UND VERFAHREN HIERFÜR

SYSTEME ET METHODE DE GESTION DE LA PUISSANCE POUR BUS D'INTERCONNEXION DE DISPOSITIF INFORMATIQUE

(84) Designated Contracting States:
**DE FR GB**

(30) Priority: **14.01.1993 US 4431**

(43) Date of publication of application:
**08.11.1995 Bulletin 1995/45**

(60) Divisional application:
**03019146.4**

(73) Proprietor: **APPLE COMPUTER, INC.**
**Cupertino, California 95014 (US)**

(72) Inventors:
• **OPRESCU, Florin**
  **Sunnyvale, CA 94086 (US)**
• **TEENER, Michael, D.**
  **Santa Cruz, CA 95060 (US)**

(74) Representative: **Wombwell, Francis et al**
**Potts, Kerr & Co.**
**15, Hamilton Square**
**Birkenhead Merseyside CH41 6BR (GB)**

(56) References cited:
**DE-U- 9 104 484**

• **IBM TECHNICAL DISCLOSURE BULLETIN vol. 16, no. 7 , December 1973 , NEW YORK US page 2429 LICAUSI N. 'Power Management'**

## Description

## BACKGROUND OF THE INVENTION

### FIELD OF THE INVENTION

The present invention relates to computer systems and in particular to a device interconnection bus for use in interconnecting components of a computer system.

### DESCRIPTION OF RELATED ART

Device interconnection busses are commonly employed to connect individual components or devices of a computer system, or a group of networked computers, to each other to allow communication between the components. Although the interconnection bus is primarily provided to facilitate communication of data, commands and other signals between computer devices, conventional busses also provide a transmission line for distributing power to at least some of the devices connected to the bus.

Generally, a device connected to a bus either has its own power-supply or it requires power drawn from the bus. A device power-supply may be a battery power-supply or a power-supply capable of connecting into a wall electrical socket. Examples of computer devices which typically include a power-supply are printers, monitors, scanners, large disk drives, large speaker/amplifiers, video equipment, central processing units (CPU) and portable computers such as lap top or notebook computers. Portable computers typically have both battery-powered capability, as well as, AC power transformer capability for drawing power from an AC electrical wall socket. Examples of devices which typically lack a power-supply and therefore must draw power from the bus include a mouse, microphone, handheld scanner, network access bridge, small disk drive, keyboard, cable extender and the like.

A sufficient amount of power must be supplied to the bus to power the bus itself and to power those devices which require power from the bus. A power-supply is provided which is capable of outputting a sufficient amount of power to the bus to power all devices connected to the bus that may require bus supplied power. Conventionally, the amount of power required is determined by assuming that all devices may be in operation at one time, and that such devices will be drawing maximum power. In other words, the computer system is configured by providing a power-supply sufficient to power all devices simultaneously at their maximum power levels. However, in practice not all devices operate simultaneously and, when operated, devices do not always consume the maximum amount of power which the device is capable of consuming. Hence, a power-supply of a conventional bus is capable of providing far more power than nominally required. This unnecessary power-supply excess adds costs to the system which may not be justified if not all devices do not operate simultaneously. In a conventional system, a fairly modest power-supply is provided, and the number of devices that can be connected to the bus is simply limited accordingly. Although this solution successfully prevents an overload of the bus caused by too many devices drawing too much power, the solution unnecessarily limits the capabilities of the bus. One of the primarily advantages of a bus interconnection is the flexibility of allowing a variety of devices to be interconnected and interchanged conveniently. This flexibility is lost if the total number of devices allowed for connection to the bus is unduly limited, or if the power-supply must be upgraded to allow an increase in the number of devices.

A further example of a prior art arrangement is disclosed in IBM TECHNICAL DISCLOSURE BULLETIN volume 16, No. 7, December 1973, NEW YORK US page 2429 LICAUSI N "Power Management", which discloses an algorithm which provides a tool to help a power user maintain power consumption below allowable demand interval peak limits as defined by the user, wherein using input data defining loads and operating periods as well as priorities, the algorithm determines when and what equipment to turn off, so that proper scheduling of that equipment can be accomplished and power demand peaks reduced.

### SUMMARY OF THE INVENTION

From the foregoing it can be appreciated that there is a need to provide an improved computer device interconnection bus system having a power management capability for maximizing the number of devices which can be connected to a bus. It is a particular object of the invention to provide a power management capability that exploits the fact that not all devices connected to a bus need be active simultaneously. It is a further object of the invention to provide such a power management capability in a device interconnection bus configured to IEEE 1394 standards.

According to the present invention there is provided a system for managing power as defined in claim 1.

Also according to the present invention there is provided a method for managing power as defined in claim 21.

### BRIEF DESCRIPTION OF THE DRAWINGS

The objects and advantages of the present invention will become more readily apparent to those ordinarily skilled in the art after reviewing the following detailed description and accompanying drawings, wherein:

Figure 1 is a simplified block diagram of a serial device interconnection bus configured in accordance with the invention;

Figure 2 is a flow chart representing a method by which a power manager system of the invention controls power usage on the serial bus of Figure 1;

Figure 3 is a graphical representation of an arbitrary bus topology in which the power manager system of Figure 2 may be utilized;

Figure 4 is a schematic illustration of a node having a two port floating device;

Figure 5 is a schematic illustration of a node having a two port autonomous device without galvanic isolation;

Figure 6 is a schematic illustration of a node having a two port autonomous device with galvanic isolation;

Figure 7 is a schematic illustration of a node having a two port power supplier device without galvanic isolation;

Figure 8 is a schematic illustration of a node having a two port power supplier device with galvanic isolation;

Figure 9 is a schematic illustration of a node having a two port internal device;

Figure 10 is a schematic illustration of a node having a three port device without galvanic isolation;

Figure 11 is a schematic illustration of a node having a three port device with galvanic isolation.

## DETAILED DESCRIPTION OF THE INVENTION

A power management system for use with a serial device interconnection bus is disclosed. In the following descriptions for the purposes of explanation details are set forth to provide a thorough understanding of the invention. However, these details are not necessarily required to practice the invention. In other instances, well known structures and circuits are shown in block diagram form to not obscure fundamental aspects of the invention.

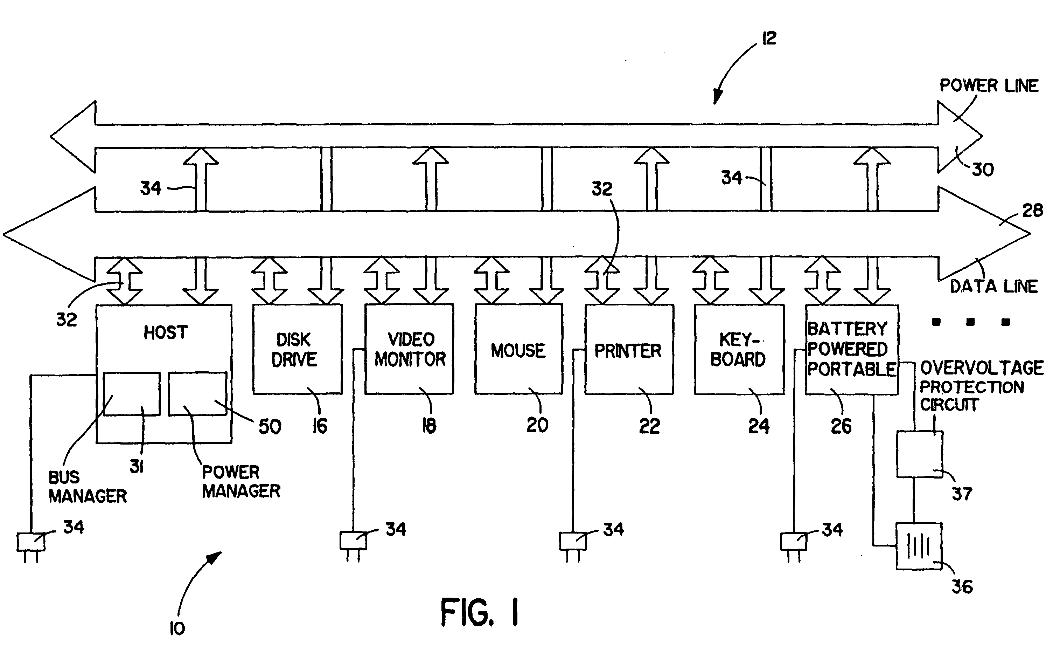

Referring to the figures, preferred embodiments of the invention will now be described. Figure 1 provides a highly simplified block diagram representation of a computer system 10 having individual components interconnected via a serial interconnection bus 12. Computer system 10 includes a host 14, a disk drive 16, a video monitor 18, an input mouse 20, a printer 22, keyboard 24, and a battery-powered portable computer 26, all interconnected via bus 12. The computer components represented in Figure 1 are provided primarily for exemplary purposes and do not represent an exhaustive list of computer devices which are inter-connectable via bus 12. Rather, a wide variety of other devices are connectable via bus 12, including scanners, speaker/amplifiers, video equipment, microphones, network access bridges, and the like. Moreover components within host 14, such as the CPU, may be individually connected to bus 12. Bus 12 may interconnect the components of a single computer system or may interconnect several separate computers, such as a network of computers.

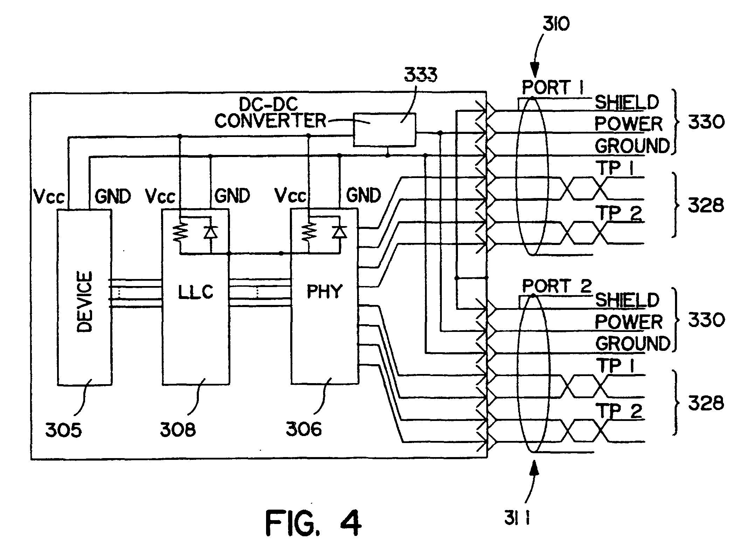

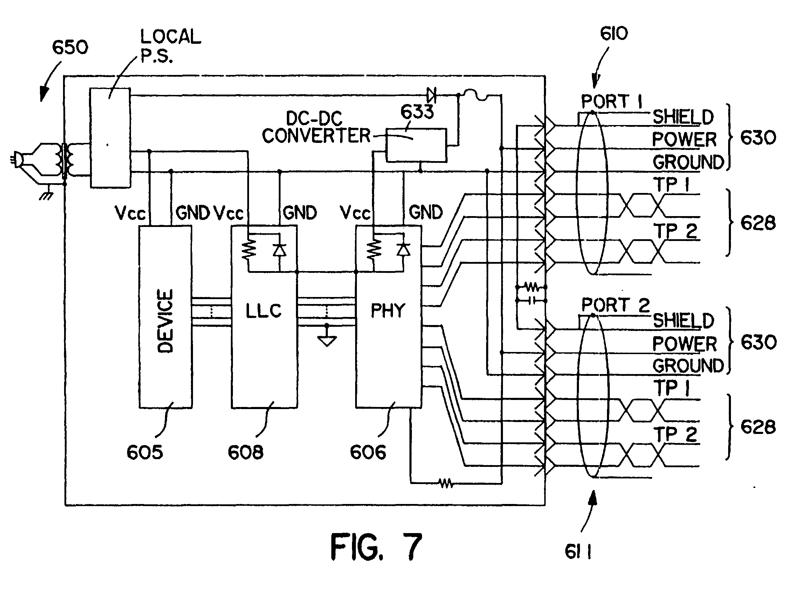

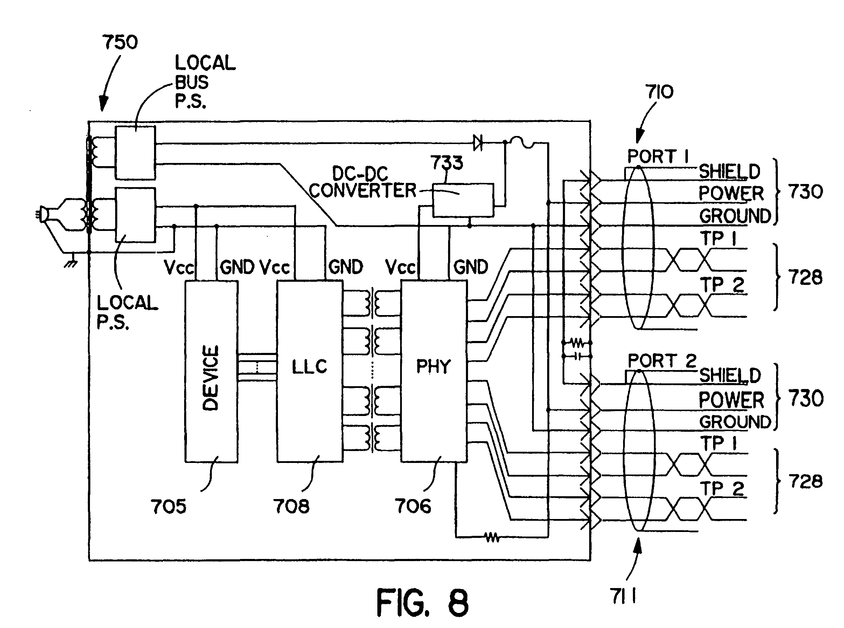

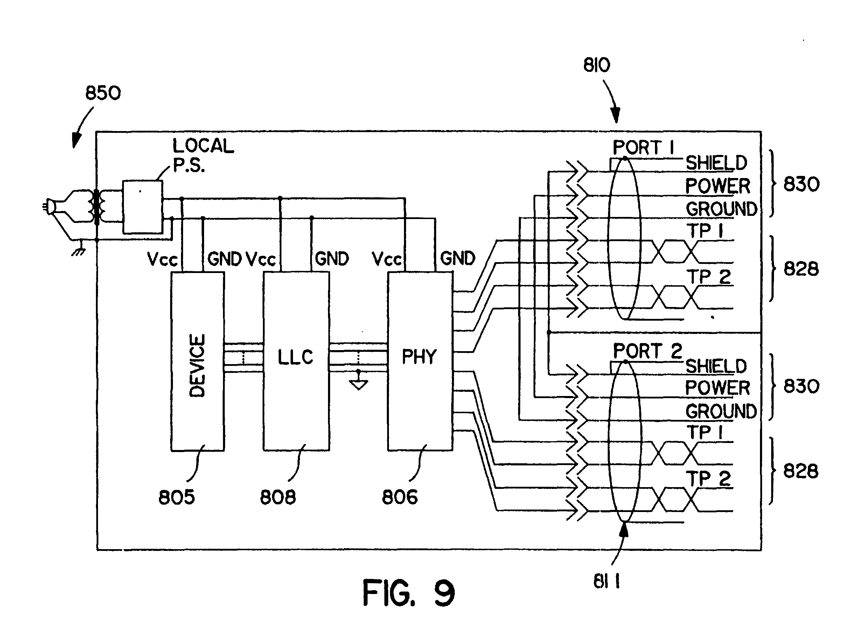

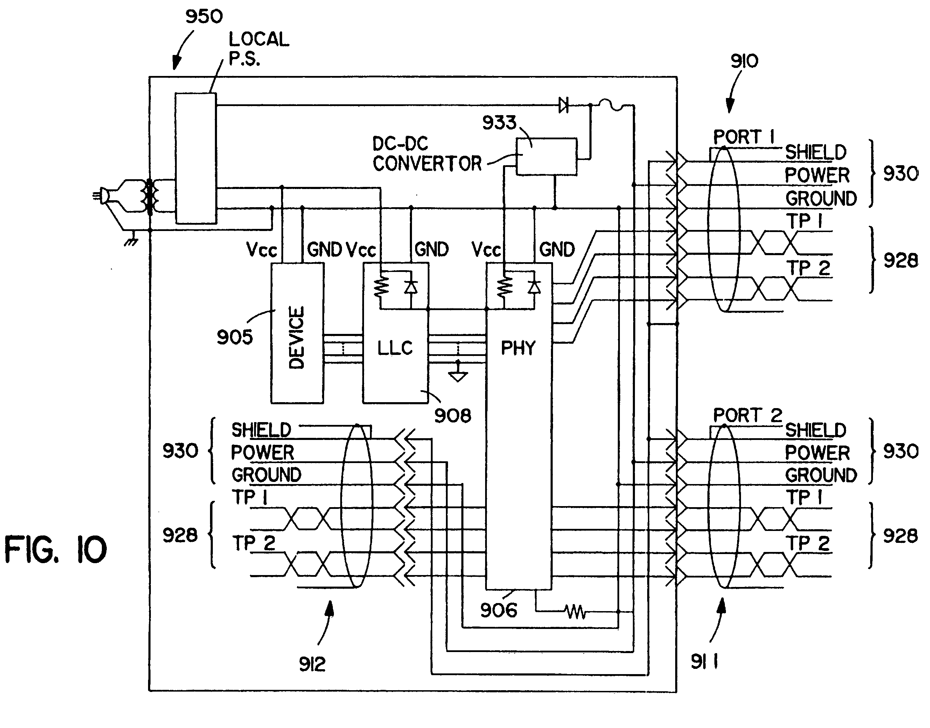

Serial bus 12 includes a signal transmission line 28 and a power transmission line 30. Signal transmission line 28 is provided for transmitting data, commands, and other signals between the computer devices. Signal transmission bus 28 may include a pair of conventional twisted-pair transmission cables. Figure 1 merely provides a simplified representation of signal line 28 and power line 30. Each may include numerous internal cable components, as well as interconnection components, examples of which are described below with reference to Figures 4 - 10.

Host 14 includes a bus manager 31 which manages signals transmitted over signal transmission line 28 in accordance with conventional bus arbitration techniques.

Host 14, video monitor 18, printer 22 and portable 26 each include AC power input capability for receiving power from a conventional wall socket. Disk drive 10, mouse 20, and keyboard 24 lack a power-supply a require power from bus 12. Portable 26 includes both a battery power capability and an AC power input capability. In Figure 1, AC power input capability is represented by power input cables 34 and the battery power capability of portable 26 is represented by battery unit 36. An over-voltage protection circuit 37 is provided in combination with the battery unit 36. The function of protection circuit 37 will be described below.

Each individual component of computer system 10 is connected to bus 12 via a signal line 32 and a power line 34. In figure 1, signal lines 32 and power lines 34 carry indices associated with each device. Double arrows represent two way data or power transmission, whereas singe arrows represent only one way transmissions. As can be seen from Figure 1, each device is capable of both transmitting and receiving data via signal line 28. However, only host 34, video monitor 18, printer 22, and portable 26 are capable of supplying power to power transmission line 30. Disk drive 16, mouse 20 and keyboard 22 each lack internal power supplies and therefor must draw power from the bus. Hence, a sufficient amount of power must be supplied to the bus from host 34, video monitor 18, printer 22, and portable 26 to adequately power Disk drive 16, mouse 20 and keyboard 22.

In conventional systems, a host is provided with a power-supply sufficient to power all devices connected to the bus at their maximum power levels simultaneously. Upon system installation, however, it is not generally known how many such devices will ultimately be connected to the bus. Therefore, to insure adequate power, a conventional bus merely includes a limit to the total number of devices. This imposes an unnecessary constraint on the number of devices connectable to the bus or the size of the power-supply.

In practice, not all devices connected to a bus need to be in operation simultaneously. Indeed in many computer systems all devices cannot be in operation simultaneously. Thus an actual power requirement of the bus may be substantially less than the power required by assuming that all devices operate simultaneously. To allow connection of a larger number of devices than conventionally allowed, the computer system of the present invention includes a power manager 50, connected within host 14, for controlling the power use of devices connected to bus 12. Power manager 50 includes an ability to determine the actual amount of power utilized by devices connected to bus 12 and an ability to control the operation of the devices to ensure that the total power drawn does not exceed the maximum available. Power manager 50 is connected to bus manager 31 for coordinating power management with signal transfer management.

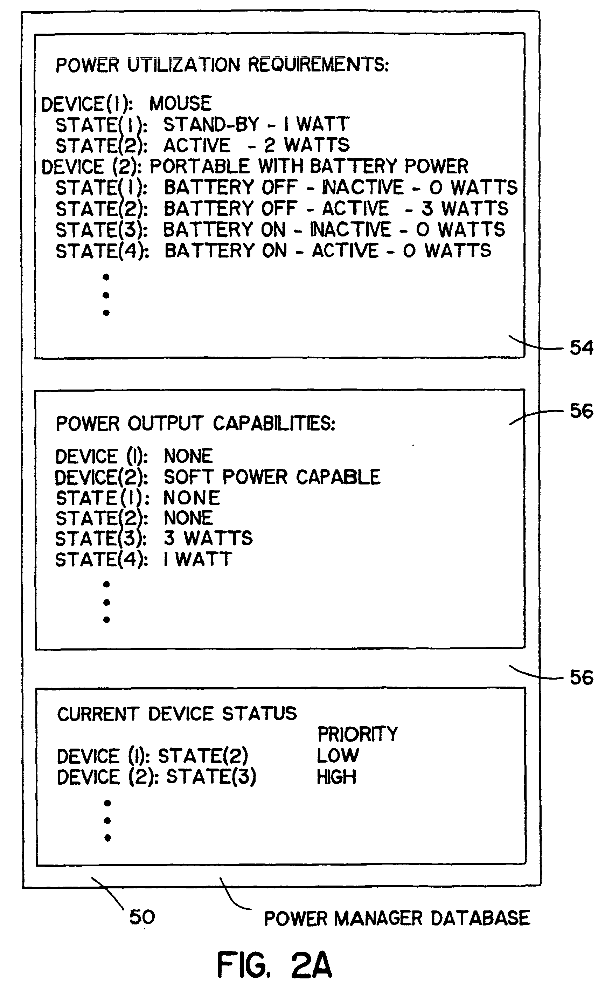

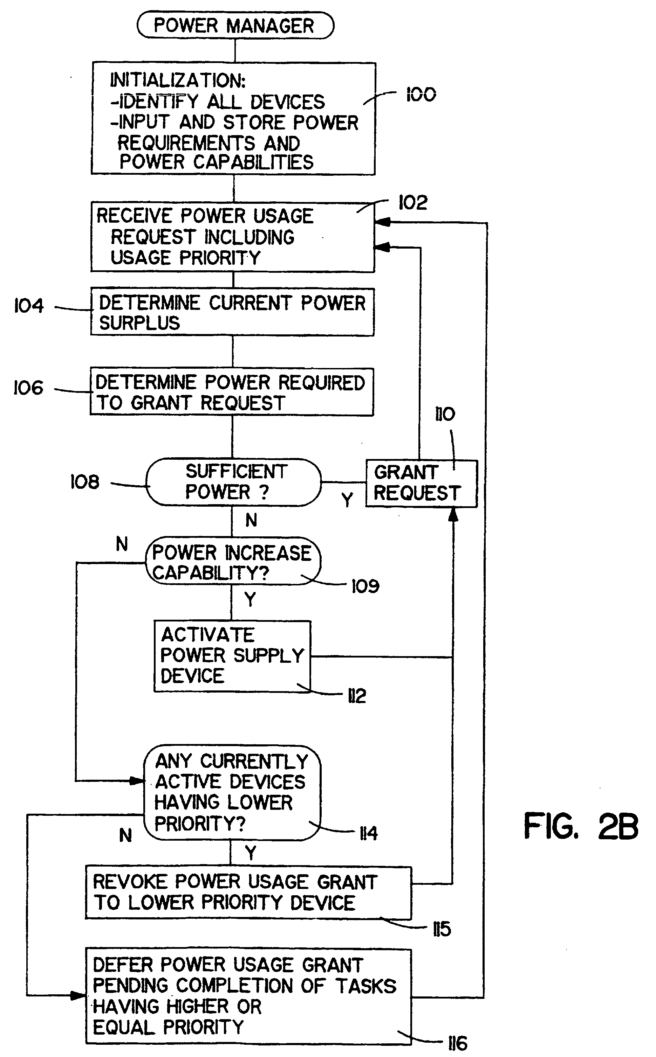

The procedure by which power manager 50 monitors total power usage and controls the operation of devices connected to the bus will be described primarily with reference to Figure 2. Figure 2 provides a flow chart illustration of the internal operation of power manager 50. Logical operations of power manager 50 are preferably implemented using a computer program executing within a processing unit of host 14. However, the operations of power manager 50 may alternatively be implemented using an integrated circuit or other hard-wired circuit techniques.

Power manager 50 is connected to data transmission bus 28 via bus manager 31 (Figure 1) for receiving and transmitting data and command signal packets in accordance with conventional data bus transmission techniques and protocols. Power manager 50 includes a data base 52 including a power utilization requirements table 54, and power output capability table 56, and a device status table 58. Power utilization requirements table 54 stores the identity of each device, and its power draw requirements for each of a number of possible operational states. A mouse, for example, typically operates in one of two states: STAND-BY and ACTIVE. In STAND-BY, the mouse is stationary and merely requires sufficient power to detect movement. Once moved by an operator, the mouse automatically draws additional power sufficient to transmit new mouse coordinates onto bus 12. As examples, the mouse may draw 1 watt in STAND-BY and 2 watts in ACTIVE mode. Power utilization requirements table 54 stores information specifying the two operational states of the mouse and the power required for each state.

As a second example, a portable computer with a battery capability but no AC power capability may operate in one of four possible states: BATTERY-OFF (INACTIVE), BATTERY OFF (ACTIVE), BATTERY ON (INACTIVE), and BATTERY ON (ACTIVE). In the battery off modes. With the battery off and the portable operating, the portable must draw power from the bus, typically 3 watts. However, in all other states, the portable does not require power, either because it is inactive or because it is utilizing its own power. Power requirement table stores values specifying the aforementioned power requirement states for the portable. Of course, the actual number of possible power requirement states of a portable may be more numerous, requiring more comprehensive information than represented in the example illustrated in Figure 2.

As another example, a disk drive may utilize one level of power when in stand-by for providing disk drive intelligence, a greater amount of power accessing data, and an even greater amount of power for high speed data transfer. Each of the various operational states and the associated required power levels are maintained in table 54.

Although table 54 in figure 2 only provides exemplary values for two devices, table 54 actually stores values for all devices connected to the bus including the host and any bus components, such as repeater modules, capable of supplying or withdrawing power from the bus. The number of states of each device and the power required in each state is predetermined for each device. For devices having a large number of operational states, table 54 may preferably store only one or two values corresponding to maximum and minimum power requirements. This information may be stored in table 54 upon installation of the computer system. Preferably however, the information is received by power manager 50 upon system initialization over bus 12 from devices connected to the bus or from components of the bus itself. This will be described in grater detail below.

Power manager database 52 additionally includes a power output capability table 56. Whereas power requirements table 54 maintains information on the amount of power that a device is capable of drawing from the bus, power capability table maintains information on the amount of power the device is capable of supplying to the data bus, in each of its possible operational states. Each device listed in table 54 includes a corresponding record in table 56. For device(1), (a mouse), the power output capability is NONE regardless of its operational state, since the mouse has no power-supply. For device(2), (the portable computer), however the power-supply capability varies depending upon the operational status of the device. For example, for operational states 1 and 2 wherein the battery of the portable is OFF, the portable cannot supply any power to the bus. However, in operational state 3, wherein the battery is ON but the portable is INACTIVE, the portable is capable of providing 3 watts. In operational state 4, wherein the battery in ON and the portable is ACTIVE, the portable is capable of supplying 1 watt to the bus, which is surplus power in excess of its own requirements. As with the power utilization requirements stored in table 54, the values stored in table 56 are predetermined for each device connectable to bus 12.

Power management database 50 also includes a device status table 58 which maintains information on the actual operational state of each device connected to the bus. The values in table 58 are periodically updated during operation of the computer system to maintain accurate information. In the example illustrated in figure 2, device(1), (the mouse), is currently in operation state(2) corresponding to ACTIVE operation, i.e. an operator is currently moving the mouse. Device(2) is currently in operational state(3) corresponding to an INACTIVE state wherein the portable is supplying power to the bus. Current status table 58 additionally includes priority values for each device. The use of the priority values is described below.

With the aforementioned tables, database 52 provides power manager 50 with all information necessary to determine the actual amount of power being supplied to the bus and the actual amount of power being withdrawn from the bus at the current time. Hence, power manager 50 has all information necessary to determine whether a power surplus exists sufficient to power additional devices.

The method by which power manager 50 manipulates the data stored within database 52 will now be described with reference to the flow chart included within figure 2. Initially, at step 100, power manager 50 initializes database 52 by receiving and storing information on all devices connected to bus 12. Information is received by power manager 50 from bus 12 via bus manager 31 in the form of data packets such as those conventionally used to transmit other types of data over a bus. The techniques by which packets are received and transmitted over bus 12 may be entirely conventional and will not be described in detail herein. Power manager 50 parses the information received over bus 12 and stores it in appropriate locations within database 52. The information received includes the power requirements and the power output capabilities of all devices connected to the bus. The initialization data also includes the current device status of all devices at system initialization.

The initialization data may be provided by the devices themselves. However, preferably, the computer system is configured in accordance with a repeater bus configuration, described below, in which each device is a part of a node which includes a dedicated chip (the Physical Interface chip, PHY, described below). The devices power requirements and capabilities are hardwired into the PHY. Upon system initialization the PHY automatically transmits the information over bus 12. In this manner, power manager 50 need only "listen" to data transmissions over bus 12 during system initialization to received the data for storing in database 52. An advantage of this implementation is that, when a device is removed from the bus or added to the bus while the bus is inactive, its dedicated PHY is also removed or added. Thus, upon initialization the power manager automatically receives data corresponding to the new system configuration. As an alternative, power data can be permanently stored in database 52 and manually updated by a system operator whenever a device is added to or removed from the system. The preferred implementation is more transparent to the system operator.

After initialization, execution proceeds to step 102 wherein the power manager receives power usage requests over bus 12 from devices connected to the bus. The power usage requests specify the identity of a device to be activated (a target device) and the operational state that is required for the device. The power usage request is transmitted in packets of data over bus 12 from either the target device or from a device which is requesting activation of the target device. For example, if a CPU requires data stored on a disk drive, the CPU transmits a power usage request to power manager 50 over bus 12 requesting activation of the disk drive and specifying that the desired operational state is a DATA ACCESS state.

At step 104, the power manager determines whether sufficient power is available on the bus to allow activation of the device. First, the power manager determines the total amount of power currently drawn from the bus by all devices connected to the bus. This is achieved by summing the power requirement values in table 54 for each of the current operational states specified in table 58. As an example, the calculation may yield a total power usage of 100 watts. Next, power manager determines the total amount of power drawn from bus 12 by summing the power output values in table 56 for each of the current operational states specified in table 58. This calculation may yield, as an example, a total of 110 watts, leaving a power surplus of 10 watts. Preferably, the power surplus value is stored as a running total. Thus, power manager need not continuously recalculate the total amount of power supplied to the bus and the total amount of power drawn from the bus. Rather, power manager 50 merely updates the running total of the power surplus as the operational states of the devices connected to the bus change.

After determining the power surplus, if any, execution proceeds to step 106 where power manager 50 determines the amount of power required to grant the power usage request. This is achieved by accessing power utilization requirements table 54 to determine the power required by the target device for the specified operation. Continuing with the example, if the disk drive requires .5 watt to read data, then the power required to grant the power usage request as determined at step 106 is .5 watts. At 108, the power manager determines whether there is a sufficient power surplus to grant the request by comparing the power required (.5 watts) to the power surplus (10 watts). If sufficient power is available, the power usage request is granted at 110 and execution returns to step 102. Once the power usage request is granted, CPU transmits its READ command to the disk drive in accordance with conventional data bus command arbitration and transmission techniques. The disk drive then operates to read the data, with the disk assured to have an adequate amount of power. Upon completion of the disk drive operation, a data packet is sent to the power manager from the disk drive indicating that the operation has completed and the additional power is no longer required. Power manager updates device status table 58 accordingly.

If, at step 108, a sufficient amount of power is not available, execution continues at step 110 where the power manager determines whether the available power surplus can be increased to allow operation of the device. This determination is made by examining power output capability table 56 and device status table 58 to determine if there are any devices connected to the bus that are capable of providing the needed extra power but which are not currently supplying power. For example, a printer, which has a power-supply, may be turned off. If the printer is capable of being turned on remotely via a soft-power-on signal, then the amount of surplus power can be increased. Accordingly, a soft-power on signal is transmitted to the printer at step 112. The current device status table is updated to reflect the change in status of the printer. Assuming that sufficient power is now available to grant the power usage request, execution proceeds to step 110. Additional logic, not shown, may be provided to allow the printer to be automatically deactivated when it is determined that the extra powered supplied by the printer is no longer required. This determination may be made at termination of execution of the device for which the power usage grant was issued or at some later time.

If, at step 110, there are no devices capable of being activated that will supply additional power sufficient to allow a grant of the power usage request, execution proceeds to step 114. At 114, the power manager compares the priority of the power usage request with the priority of previously granted power usage requests. If devices are currently operating subject to a power usage request having a lower priority, the power manager revokes the previously granted power usage request thereby increasing the available power surplus sufficient to allow a grant of the new power usage request. A wide variety of prioritization schemes may be implemented, and additional logic, not shown, may be utilized. Generally, step 114 provides a power negotiation step allowing power manager 50 to arbitrate numerous power usage requests.

If no previously granted power usage requests can be revoked, then the current power usage request is deferred at step 116 pending an increase in surplus power. Although not shown, additional logic may be provided to facilitate processing of deferred power usage requests.

The operations of power manager 50 described herein are continuously re-executed in a loop to process all power usage requests received while the bus is on-line. By continuously tracking the amount of surplus power, if any, and by having a database providing power usage information for the entire bus, power manager 50 is capable of intelligently managing the operation of devices connected to the bus to ensure that power is utilized efficiently. This eliminates the need to provide a power-supply capable of providing enough power to operate all devices simultaneously at their maximum power levels. Hence, either a smaller power-supply may be utilized, or more devices can be connected, than with a conventional bus lacking a power management capability.

## IEEE P1394 IMPLEMENTATION

Although the principles of the invention may be advantageously employed in a variety of data bus architectures, the invention is preferably employed within a data bus configured to IEEE P1394 standards having an arbitrary topology of connected devices.

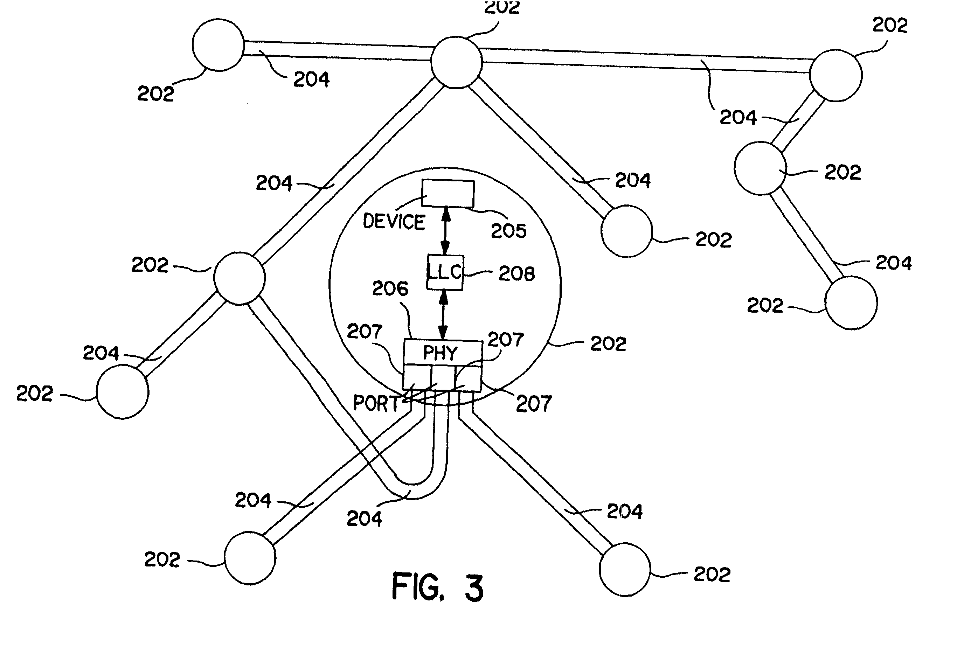

Figure 3 provides a schematic illustration of such a bus. Computer system 200 of Figure 3A includes a set of nodes 202 connected via interconnection lines 204. Each node typically includes a device, such as a printer, mouse, CPU etc., one Physical Layer Interface (PHY) chip 206 with three external ports 207 and a single Link Layer Interface (LLC) chip 208. However, a node need not contain a LLC or a device, but need only include, at minimum, a single PHY chip with at least one port. Each port of PHY chip is connected to a socket (not shown in Figure 3) which which is connected through a cable to a socket of another node.

The PHY chip, through its external ports 207, operates as a repeater node allowing data packets to be sequentially transmitted between nodes. An individual node is illustrated in Figure 3. Each PHY maintains the power initialization data, described above, pertaining to the device connected to the node. This data may be hard-wired onto the PHY using conventional techniques.

At minimum, a certain amount of power must be supplied to the PHY chips to allow operation of the bus, independent of the power required by devices connected to the bus. Accordingly, the power usage requirements database, described above, maintains information on the power required by each PHY chip, as well as the power required by devices connected to the bus. In this regard the PHY chip may be regarded as just another power consuming "device". Typically, each PHY, including its transmitting and receiving ports 207 requires about 0.5 watts as an overhead power requirement.

Considering specific devices which are connectable to the P1394 bus in greater detail, such devices may be broadly categorized as follows:

a) Low port count floating devices, which have at most two accessible ports, and cannot provide power to the bus. One port examples include a mouse, microphone, hand-held scanner, network access bridge. Two port examples include a small disk drive, small, video camera, keyboard, small speakers, and cable extenders.

b) Low power count autonomous devices, which have at most two accessible ports but can use their own power sources in addition to power supplied over the bus. One port examples include, a portable computer or a portable peripheral. Two port examples include, a disk drive, tape drive, scanner, small printer, speaker, and a Nu bus extension card.

c) Low port count internal devices, which are devices which reside within a CPU or high end printer and which are expected to operate only in conjunction with the host CPU or high end printer. Such devices have at most two ports, neither of which is accessible from the exterior of the host. A two port internal device is powered exclusively by the host machine and does not require power from the bus. Examples include disk drives, CD drives, built-in microphones, built-in cameras, and the like.

d) High port count devices, which have at least three accessible ports and a power supply distinct from the bus supplier. Examples include large devices such as printers, monitors, scanners, large Disk drives, large speakers/amplifiers, video equipment, CPU's, etc.

e) Battery powered devices, which are low port count autonomous deices. In general such battery powered devices have single external port and, at most, one internal port. The power supply is sufficient to power an entire bus, having only reduced size floating point devices, in addition to itself.

f) Power source and bus extender devices are special types of high port count devices. These devices have three ports and provide to the bus a maximum nominal power of about 54 watts.

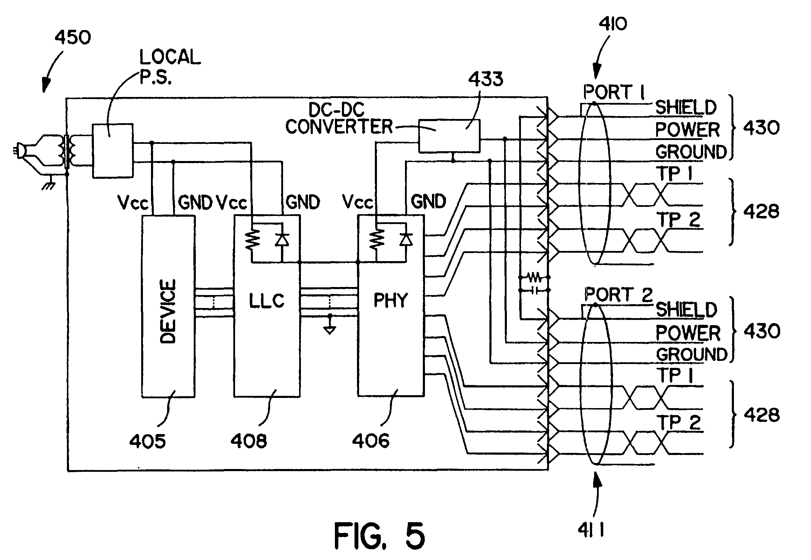

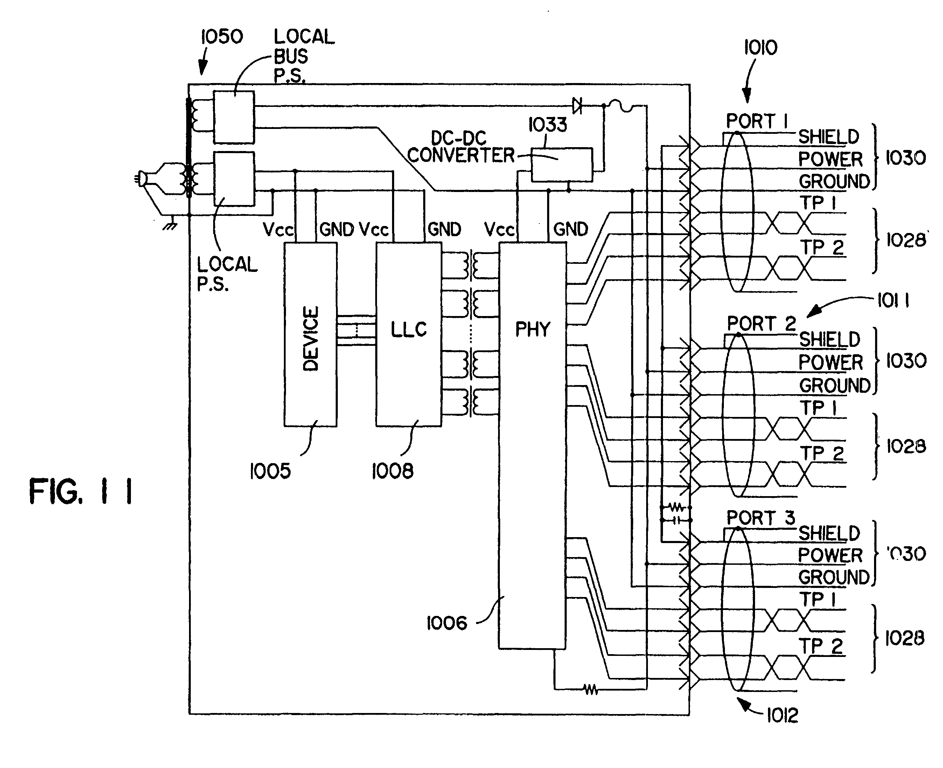

Schematic illustrations of the hardware connections of the aforementioned devices to the LLC and PHY chips are provided in Figures 4-11. The various hard-ware interconnection diagrams illustrated in Figures 4-11 are fairly similar is layout, hence only the Figure 4 will be described in detail. Figure 4 illustrates an exemplary node 302 having a device 305, a PHY 306 and an LLC 308. Device 302 is a two port floating device. PHY 306 has corresponding ports 310 and 311, of the type identified above via reference numeral 207. Bus interconnection lines 312 and 313, respectively, are connected into ports 310 and 311. Each line 312 and 313 includes two pairs of twisted-pair data transmission lines 328 and a power transmission line 330. Each power transmission line includes separate shield, ground and power lines. The node of Figure 4 includes a single DC-DC converter 333 connected between the power transmission line 330 and device, 305, PHY 306 and LLC 308. The node of Figure 5-11 include similar components, identified by like reference numerals by sequential incremented by one hundreds, i.e. 402, 504, 602, etc.. The nodes of Figures 5-11 additionally include local power supplies 450, 550, etc., for connection into a AC power supply.

For P1394 implementation the following parameters are preferred. The power output to the bus by a power supplying device is between 10 and 40 volts DC, at a nominal current of 1.5 Amps. The devices connected to the bus must be able to operate normally when voltage on the bus is between 7 volts DC and 40 volts DC. The voltage on the bus is measured between the power line and the ground line at each bus node. All devices must be capable of operating normally with a minimum ground voltage drop between two adjacent nodes on the bus of 0.5 volts.

A low port count device, described above, must not use more than 160 mA total current from the nominal 5 volt power line. A power usage request must be transmitted to the power manager before the device is allowed to draw additional current. A high port count device must not use more than 230 mA total current from the nominal 5 volt power supply with submitting a power usage request to the power manager. High port count devices are always required to supply power to the bus. Soft-power control capability is preferably implemented within each high port count device to allow for activation of the device by the power manager to increase the total power supplied to the bus.

Battery powered devices are controlled to supply power to the bus when no non-battery powered devices are suppling power, and to drawn power from the bus otherwise. In other words, if at least one device having a AC power input capability to operating to supply power to the bus, then the battery powered devices need not provide power via their battery units. This helps conserve battery power when other power sources are available, yet allows the bus to operate on battery power when needed. Control of the battery powered device may be achieved by power manager 50 (Figure 2) via data packets and soft-power on signals sent over the bus. Alternatively, or as a supplemental control mechanism, each battery unit is configured to provide power at a voltage below the voltage provided by non-battery powered sources. An over-voltage protection circuit 37 (Figure 1), is connected between each battery unit 36 and the bus. Protection circuit 37 detects the voltage of power carried on the bus and disconnects the battery unit from the bus if a higher voltage is detected than is output from the battery. In this manner, battery power is automatically disconnected whenever a non-battery powered source is supplying power to the bus. The battery unit is automatically connected to the bus when either no power is present on the bus or power on the bus is at the battery-powered voltage level. By configuring each battery powered device to provide power at an equal voltage to each other, a number of battery powered devices can provide power simultaneously to the bus. All are automatically disconnected by respective protection circuits when at least one non-battery powered device begins supplying power to the bus. The construction and operation of each individual protection circuit 37 may be entirely conventional.

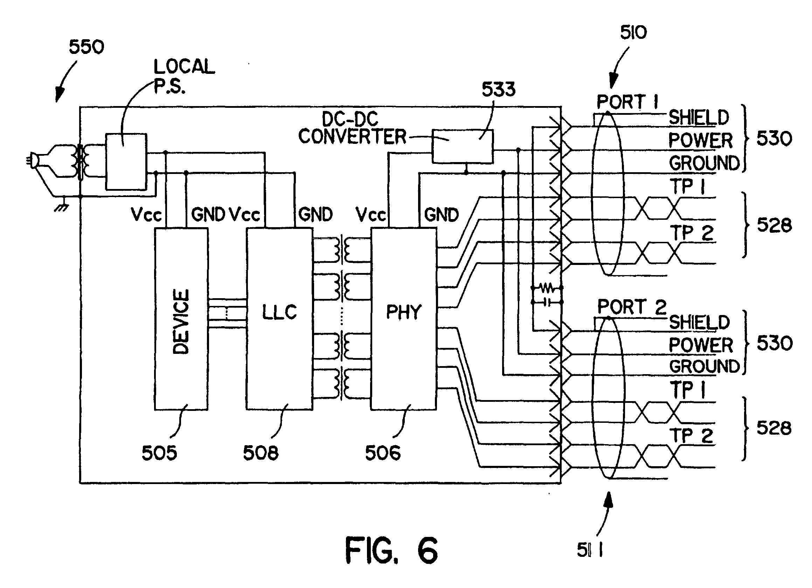

Preferably, galvanic isolation of at least some of the devices connected to bus 200 is provided. Galvanic isolation may be implemented using an isolation barriers at the interface between each PHY chip and it associated device. Alternatively, feed-through isolation barriers may be inserted in-line with a cable segment. In either case the galvanic isolation barrier should withstand a 500 volts peak voltage across the barrier. Galvanic isolation is provided in the nodes illustrated in Figures 6, 8 and 11.

For a device to draw more power from the bus than the minimum allocated powers listed above, the device must transmit a power usage request to the power manager. Alternatively, a device requesting activation of another device may transmit the power usage request. Power usage is negotiated with the power manager in increments of 0.1 watts. The power manager uses a power calculation formula of:

$$P_{req} = I * V * K_{dc} * K_{pd} / 100,$$

where $K_{pd}$ is a power distribution efficiency coefficient, typically 0.8, $K_{dc}$ is a DC-DC converter worst case efficiency within an expected load operating range and an input voltage range of 7 volts DC to 40 volts DC, typically 0.7, V is the nominal operating voltage, typically 5 volts, I is the maximum expected current consumption from the power line in units of mA, and $P_{req}$ is the "required power" data for the power manager, rounded up to 0.1 watt increments. The converter efficiency of $K_{dc}$ includes output voltage tolerance effects.

Although a single power manager may be provided in the host, preferably each high port count device includes power manager software to allow the device to operate as the power manager. Power that a high port count device is capable of supplying to the bus is transmitted to the bus currently operating power manager in increments of 0.1 watts. To determine the amount of power that the device is capable of supplying, the following calculation formula is used:

$$P_{av} = I_{source} * V_{out} / 100,$$

wherein $V_{out}$ is the minimum voltage the device may put on the bus, in volts, $I_{source}$ is the device worst case current source capability in mA, and $P_{av}$ is the "available power" data for the power manager, rounded up to increments of 0.1 watts.

The power manager maintains, at all times, a reserve of 2 watts to account for an additional low port count device insertion.

Of course, other power negotiation formulas may be employed, and other system power constraints, may be employed, consistent with the general principles of the invention. The aforementioned rules and constraints are preferred.

What has been described is a system for managing the power on a device interconnect bus, particularly one implemented to IEEE P1394 standards. The power management system tracks the total amount of power used by components connected to the bus and tracks the total amount of power supplied to the bus. The power manager controls the operation of devices to ensure that a sufficient amount of power is available. In particular the system sequences the use of devices, such as disk drives and the like, to maintain the total power drawn from the bus below a maximum available amount of power.

Although described with reference to a computer system having a host and a set of peripheral devices, the principles of the invention may be exploited in a variety of systems interconnected via a bus. Moreover, the functions of the power manager may be implemented in a device other than the host or may be implemented in any of a class of devices. For example, in a bus system including a phone interface unit, such as a modem, the phone interface can assume control of power management functions if the host is powered off, or if there is no host. In such a system, only the phone interface unit and the bus itself need be powered at all times. When a telephone communication is received by the phone interface unit, the phone interface unit having power management functions powers up other devices connected to the bus to perform a desired function, such as to receive a facsimile, voice mail message or data transmission. In this manner the advantages of a power manager may be exploited in a telecommunication system interconnected via a bus. In general, the principles of the invention may be exploited in any system having devices interconnected via a bus, wherein some of the devices require power drawn from the bus.

Some portions of the detailed descriptions provided above are represented in terms of algorithms and symbolic representations of operations on data bits within a computer memory. These algorithmic descriptions and representations are means used by those skilled in the data processing arts to most effectively convey the substance of their work to others skilled in the art. An algorithm is here, and generally, conceived to be a self-consistent sequence of steps leading to a desired result. The steps require physical manipulation of physical quantities. Usually, though not necessarily, these quantities take the form of electromagnetic signals capable of being stored, transferred, combined, compared, and otherwise manipulated. It has proven convenient at times to refer to these signals as bits, values, elements, symbols, characters, terms, numbers and the like. It should be borne in mind, however, that all of these and similar terms are to be associated with the appropriate physical quantities and are merely convenient labels applied to these quantities.

Further, the manipulations performed are often referred to in terms, such as adding and subtracting, which are commonly associated with mental operations performed by a human operator. No such capability of a human operator is necessary or desirable in most cases in any of the operations described herein. Rather, the operations are machine operations. In all cases the distinction between the method of operations in operating a computer and the method of computation would be borne in mind.

## Claims

1. A system for managing power provided to devices connected to a device interconnection bus, wherein power is carried on said bus, said system comprising:

means for receiving information specifying a total amount of power surplus, if any, on said bus, said power surplus being an amount of power available on said bus in excess of power currently drawn from said bus by said devices and power required by the bus itself;

means for receiving and storing (100) information specifying all of the devices connected to said bus that are capable of drawing power from said bus, including information specifying the power requirements of each operational state of each device;

means for receiving (102) power usage requests over said bus, said power usage requests specifying a requested device and a desired operational state of said requested device; and

control means for determining (104) whether the power surplus, if any, is sufficient to allow operation of said requested device in said desired operational state, and

for granting said power usage request, if the power surplus is sufficient, and denying said bus request if said power surplus is insufficient.

2. The system of claim 1, wherein said information specifying the power requirements of each operational state includes power requirements for one or more operational states of each of the plurality of said devices, wherein a means for maintaining information regarding the power currently drawn includes means for periodically determining a current operational state of each device.

3. The system of claim 1, wherein said control means comprises:

means for periodically determining a new total power requirement based on the grant of the power usage request;

means for determining whether the new total amount of power requirement exceeds a maximum amount of power available, and

power negotiation means, responsive to a determination that the new total amount of power requirement exceeds the maximum amount of power available, for granting or denying said power usage request.

4. The system of claim 3, wherein said power negotiation means comprises means for deferring activation of one or more of said devices for which said power usage request is received to maintain the new total amount of power requirement at a level that is no greater than said maximum amount of power available.

5. The system of claim 3, wherein said power negotiation means comprises means for revoking a power usage grant to a previously granted device, to allow a power usage grant to a newly requested device.

6. The system of claim 3, wherein said power negotiation means comprises means for activating additional devices which are capable of providing power to said bus, to increase the total amount of power available.

7. The system of claim 6, wherein said means for activating an additional device comprises means for transmitting soft-power on commands over said bus to said inactive device.

8. The system of claim 3, wherein at least one of said devices includes a battery power capability, and wherein said power negotiation means comprises:

means for activating said battery power capability of said device when an insufficient amount of power surplus is available to power said device with said battery power; and

means for deactivating said battery power capability of said device when said amount of power surplus is sufficient to power said device.

9. The system of claim 8, wherein said battery power device outputs power to said bus at a voltage level below a voltage provided to said bus by non-battery-powered devices, wherein said battery-powered device outputs power to said bus when no non-battery-powered devices are supplying power to said bus and draws power from said bus when at least one non-battery-powered device is providing power to said bus.

10. The system of claim 1, further comprising
sequencing means, responsive to a determination that an insufficient amount of power surplus is available, for deferring operation of said device for which a power usage request has been received pending an increase in said power surplus.

**11.** The system of claim 10, wherein said control means, responsive to a determination that an insufficient amount of power surplus is available, changes the operational status of an operational device to a lower power requirement level to provide an increased power surplus to enable operation of said device for which a power usage request was received.

**12.** The system of claim 11, wherein said control means comprises means for deactivating an active device to provide an increased power surplus.

**13.** The system of claim 10, wherein said bus carries power and said system further comprises means for maintaining information regarding said power surplus, if any, available on said bus.

**14.** The system of claim 13, wherein said control means, responsive to a determination that an insufficient amount of power surplus is available, for changing the operational state of an operational device to a lower power requirement level to provide an increased power surplus to enable operation of said device for which a power usage request was received.

**15.** The system of claim 14, wherein said control means comprises means for deactivating an active device to provide an increased power surplus.

**16.** The system of claim 14, wherein said control means includes:

means for periodically determining a new total power requirement based on the grant of the power usage request;
means for determining whether the new total amount of power requirement exceeds said maximum amount of power available; and
power negotiation means, responsive to a determination that the new total amount of power requirement exceeds the maximum amount of power available, for granting or denying said power usage request.

**17.** The system of claim 16, wherein said power negotiation means includes means for deferring activation of one or more of said devices for which said power usage request is received to maintain the new total amount of power requirement at level that is no greater than said maximum amount of power available.

**18.** The system of claim 16, wherein said power negotiation means includes means for revoking a power usage grant to a previously granted device, to allow a power usage grant to a newly requested device.

**19.** The system of claim 16, wherein said power negotiation means includes means for activating additional devices which are capable of providing power to said bus, to increase the total amount of power available.

**20.** The system of claim 19, wherein said means for activating an additional device includes means for transmitting soft-power on commands over said bus to said inactive device.

**21.** A method for managing power provided to devices connected to a device interconnection bus, wherein power is carried on said bus, said method comprising:

receiving information specifying a total amount of power surplus, if any, on said bus, said power surplus being an amount of power available on said bus in excess of power currently drawn from said bus by said devices and power required by the bus itself;
receiving and storing (100) information specifying all of the devices connected to said bus that are capable of drawing power from said bus, including information specifying the power requirements of each operational state of each device;
receiving (102) power usage requests over said bus, said power usage requests specifying a requested device and a desired operational state of said requested device;
determining (104) whether the power surplus, if any, is sufficient to allow operation of said requested device in said desired operational state; and
granting said power usage request, if the power surplus is sufficient, and denying said bus request if said power surplus is insufficient.

**22.** The method of claim 21, wherein if said power usage request is denied, the method further comprises deferring granting said power usage request pending an increase in the power surplus, if any, to an amount sufficient to power said requested device at said desired operational state.

**23.** The method of claim 21, wherein if said power usage request is denied, the method further comprises controlling one or more currently operational devices to change the operational states of said devices to a state requiring less power.

**24.** The method of claim 21, further comprising:

receiving information specifying the power output of devices capable of supplying power to said bus; and

controlling said devices capable of supplying power to activate or deactivate one or more of said devices in response to a determination of a total amount of power required in granting said power usage requests.

## Patentansprüche

1. Ein System zum Verwalten der Energieversorgung für mit einem Geräteverbindungsbus verbundene Geräte, wobei die Energie über den Bus übertragen wird, wobei das System aufweist:

   Mittel zum Empfangen von Informationen, die einen Gesamtbetrag einer ggf. vorhandenen überschüssigen Leistung auf dem Bus spezifizieren, wobei die überschüssige Leistung ein Betrag einer auf dem Bus zur Verfügung stehenden Leistung ist, die über die aktuell von dem Bus durch die Geräte gezogene Leistung und die für den Bus selbst benötigte Leistung hinausgeht;
   Mittel zum Empfangen und Speichern (100) von Informationen, die sämtliche mit dem Bus verbundene Geräte spezifizieren, die in der Lage sind, Leistung aus dem Bus zu ziehen, und die Informationen einschließen, die den Leistungsbedarf jedes Betriebszustands jedes Geräts spezifizieren;
   Mittel zum Empfangen (102) von Energiebenutzungsanforderungen über den Bus, wobei die Energiebenutzungsanforderungen ein angefordertes Gerät und einen gewünschten Betriebszustand des angeforderten Geräts spezifizieren; und
   Steuermittel zum Bestimmen (104), ob die ggf. vorhandene überschüssige Leistung ausreichend ist, um den Betrieb des angeforderten Geräts in dem gewünschten Betriebszustand zu ermöglichen, und zum Gewähren der Energiebenutzungsanforderung, sofern die überschüssige Leistung ausreichend ist, bzw. zum Ablehnen der Busanforderung, sofern die überschüssige Leistung nicht ausreichend ist.

2. Das System nach Anspruch 1, wobei die den Leistungsbedarf jedes Betriebszustands spezifizierende Informationen den Leistungsbedarf für einen oder mehrere Betriebszustände jedes der mehreren Geräte einschließen, wobei ein Mittel zum jedes der mehreren Geräte einschließen, wobei ein Mittel zum Aufrechterhalten von Informationen bezüglich der aktuell gezogenen Leistung ein Mittel zum periodischen Bestimmen eines aktuellen Betriebszustands jedes Geräts einschließt.

3. Das System nach Anspruch 1, wobei die Steuermittel aufweisen:

   Mittel zum periodischen Bestimmen eines neuen Gesamtleistungsbedarfs auf der Grundlage der Gewährung der Energiebenutzungsanforderung;
   Mittel zum Bestimmen, ob der neue Gesamtbetrag des Leistungsbedarfs einen Maximalbetrag der zur Verfügung stehenden Leistung überschreitet; und
   auf eine Bestimmung, daß der neue Gesamtbetrag des Leistungsbedarfs den Maximalbetrag der zur Verfügung stehenden Leistung überschreitet, ansprechende Energieaushandlungsmittel zum Gewähren oder Ablehnen der Energiebenutzungsanforderung.

4. Das System nach Anspruch 3, wobei die Energieaushandlungsmittel Mittel zum Zurückstellen der Aktivierung eines oder mehrerer der Geräte, für welche die Energiebenutzungsanforderung empfangen worden ist, um den neuen Gesamtbetrag des Leistungsbedarfs auf einem Pegel zu halten, der nicht größer als der Maximalbetrag der zur Verfügung stehenden Leistung ist.

5. Das System nach Anspruch 3, wobei die Energieaushandlungsmittel Mittel zum Wiederrufen einer Energiebenutzungsgewährung für ein zuvor gewährtes Gerät aufweisen, um eine Energiebenutzungsgewährung für ein neu angefordertes Gerät zu ermöglichen.

6. Das System nach Anspruch 3, wobei die Energieaushandlungsmittel Mittel zum Aktivierung zusätzlicher Geräte, welche dem Bus Energie zur Verfügung stellen können, umfassen, um den Gesamtbetrag der zur Verfügung stehenden Leistung zu erhöhen.

7. Das System nach Anspruch 6, wobei die Mittel zum Aktivieren eines zusätzlichen Geräts Mittel zum Übermitteln von Soft-Energie-Ein-Kommandos über den Bus an das inaktive Gerät umfassen.

8. Das System nach Anspruch 3, wobei wenigstens eines der Geräte die Möglichkeit einer Batterieversorgung enthält und wobei die Energieaushandlungsmittel umfassen:

   Mittel zum Aktivieren der Batterieversorgungsmöglichkeit des Geräts, wenn ein nicht ausreichender Betrag der überschüssigen Leistung verfügbar ist, um das Gerät mit der Batterieversorgung zu versorgen; und
   Mittel zum Deaktivieren der Batterieversorgungsmöglichkeit des Geräts, wenn der Betrag der überschüssigen Leistung ausreichend ist, um das Gerät zu versorgen.

9. Das System nach Anspruch 8, wobei das batterieversorgte Geräte Energie auf den Bus bei einem Spannungspegel ausgibt, der unter einer dem Bus von nicht-batterie-versorgten Geräten zur Verfügung gestellten Spannung liegt, wobei das batterieversorgte Gerät Energie auf den Bus ausgibt, wenn kein nicht-batterie-versorgtes Gerät dem Bus liefert, und es Energie von dem Bus zieht, wenn zumindest ein nicht-batterie-versorgtes Gerät dem Bus Energie zur Verfügung stellt.

10. Das System nach Anspruch 1, ferner aufweisend:

   auf eine Feststellung, daß ein nicht ausreichender Betrag überschüssiger Leistung zur Verfügung steht, ansprechende Sequenziermittel zum Zurückstellen des Betriebs des Geräts, für welches eine Energiebenutzungsanforderung empfangen worden ist, bis zu einer Erhöhung der überschüssigen Leistung.

11. Das System nach Anspruch 10, wobei die Steuermittel, die auf eine Feststellung, daß ein nicht ausreichender Betrag überschüssiger Leistung zur Verfügung steht, ansprechen, den Betriebsstatus eines betriebenen Geräts auf einen geringeren Leistungsbedarfspegel ändern, um eine erhöhte überschüssige Leistung zur Verfügung zu stellen, um einen Betrieb des Geräts zu ermöglichen, für welches eine Energiebenutzungsanforderung empfangen worden ist.

12. Das System nach Anspruch 11, wobei die Steuermittel Mittel zum Deaktivieren eines aktiven Geräts, um eine erhöhte überschüssige Leistung zur Verfügung zu stellen, umfassen.

13. Das System nach Anspruch 10, wobei der Bus die Energie führt und das System ferner Mittel zum Aufrechterhalten von Informationen bezüglich der ggf. vorhandenen überschüssigen Leistung, die auf dem Bus zur Verfügung steht, aufweist.

14. Das System nach Anspruch 13, wobei die Steuermittel, die auf eine Feststellung ansprechen, daß ein nicht ausreichender Betrag überschüssiger Leistung zur Verfügung steht, dazu dienen, den Betriebszustand eines betriebenen Geräts auf einen geringeren Leistungsbedarfspegel ändern, um eine erhöhte überschüssige Leistung zur Verfügung zu stellen, um ein Betrieb des Geräts, für welche eine Energiebenutzungsanforderung empfangen worden ist, zu ermöglichen.

15. Das System nach Anspruch 14, wobei die Steuermittel Mittel zum Deaktivieren eines aktiven Geräts, um eine erhöhte überschüssige Leistung zur Verfügung zu stellen, umfassen.

16. Das System nach Anspruch 14, wobei die Steuermittel einschließen:

   Mittel zum periodischen Bestimmen eines neuen Gesamtleistungsbedarfs auf der Grundlage der Gewährung der Energiebenutzungsanforderung;
   Mittel zum Bestimmen, ob der neue Gesamtbetrag des Leistungsbedarfs den Maximalbetrag der zur Verfügung stehenden Leistung überschreitet; und
   Energieaushandlungsmittel, die auf eine Bestimmung, daß der neue Gesamtbetrag des Leistungsbedarfs den Maximalbetrag der zur Verfügung stehenden Leistung überschreitet, ansprechen, zum Gewähren oder Ablehnen der Energiebenutzungsanforderung.

17. Das System nach Anspruch 16, wobei die Energieaushandlungsmittel Mittel zum Zurückstellen einer Aktivierung eines oder mehrerer der Geräte, für welche die Energiebenutzungsanforderung empfangen worden ist, enthalten, um den neuen Gesamtbetrag des Leistungsbedarfs auf einem Pegel zu halten, der nicht größer als der Maximalbetrag der zur Verfügung stehenden Leistung ist.

18. Das System nach Anspruch 16, wobei die Energieaushandlungsmittel Mittel zum Widerrufen einer Energienutzungsgewährung an ein zuvor gewährtes Gerät einschließen, um eine Energienutzungsgewährung an ein neu angefordertes Gerät zu ermöglichen.

19. Das System nach Anspruch 16, wobei die Energieaushandlungsmittel Mittel zum Aktivieren zusätzlicher Geräte einschließen, welche in der Lage sind, dem Bus Energie zur Verfügung zu stellen, um den Gesamtbetrag der zur Verfügung stehenden Leistung zu erhöhen.

20. Das System nach Anspruch 19, wobei die Mittel zum Aktivieren eines zusätzlichen Geräts Mittel zum Übermitteln von Soft-Spannungsversorgung-Ein-Kommandos über den Bus an das inaktive Gerät einschließen.

21. Ein Verfahren zum Verwalten der an mit einem Gerätverbindungsbus verbundene Geräte zur Verfügung gestellten Energie, wobei die Energie über den Bus übertragen wird, wobei das Verfahren umfaßt:

   Empfangen von Informationen, die einen Gesamtbetrag einer ggf. vorhandenen überschüssigen Leistung auf dem Bus spezifizieren, wobei die überschüssige Leistung ein Betrag der auf dem Bus zur Verfügung stehenden Leistung, soweit sie die gegenwärtig aus dem Bus von den Geräten gezogene Leistung und die für den Bus selbst erforderliche Leistung überschreitet, ist;

Empfangen und Speichern (100) von Informationen, die sämtliche mit dem Bus verbundene Geräte spezifizieren, die in der Lage sind, Energie aus dem Bus zu ziehen, einschließend Informationen, die den Leistungsbedarf jedes Betriebszustands des Geräts spezifizieren;

Empfangen (102) von Energiebenutzungsanforderungen über den Bus, wobei die Energiebenutzungsanforderungen ein angefordertes Gerät und einen gewünschten Betriebszustand des angeforderten Geräts spezifizieren;

Bestimmen (104), ob die ggf. vorhandene überschüssige Leistung ausreichend ist, um einen Betrieb des angeforderten Geräts in dem gewünschten Betriebszustand zu ermöglichen; und

Gewähren der Energiebenutzungsanforderung, sofern die überschüssige Energie ausreichend ist, und Ablehnen der Busanforderung, sofern die überschüssige Leistung nicht ausreichend ist.

**22.** Das Verfahren nach Anspruch 21, wobei dann, wenn die Energiebenutzungsanforderung abgelehnt wird, das Verfahren ferner umfaßt ein Zurückstellen der Gewährung der Energiebenutzungsanforderung bis zu einer Erhöhung der ggf. vorhandenen überschüssigen Energie bis zu einem Betrag, der ausreichend ist, um das angeforderte Gerät bei dem gewünschten Betriebszustand zu versorgen.

**23.** Das Verfahren nach Anspruch 21, wobei dann, wenn die Energiebenutzungsanforderung abgelehnt wird, das Verfahren ferner umfaßt das Steuern eines oder mehrerer gegenwärtig betriebsbereiter Geräte derart, daß der Betriebszustand der Geräte in einen Zustand geändert wird, der weniger Leistung erfordert.

**24.** Das Verfahren nach Anspruch 21, ferner umfassend:

Empfangen von Informationen, die die Leistungsausgabe von Geräten spezifiziert, die in der Lage sind, Energie an den Bus zu liefern; und

Steuern der Geräte, die zum Liefern von Energie in der Lage sind, derart, daß eines oder mehrere der Geräte in Abhängigkeit von einer Bestimmung eines Gesamtbetrags von beim Gewähren der Energiebenutzungsanforderungen erforderlichen Leistung zu aktivieren oder zu deaktivieren.

## Revendications

**1.** Un système permettant de gérer la puissance fournie à des périphériques connectés à un bus d'interconnexion de périphériques, dans lequel la puissance est acheminée sur ledit bus, ledit système comprenant :

un moyen pour recevoir des informations spécifiant une quantité totale de puissance excédentaire, s'il y en a, sur ledit bus,

ledit excédent de puissance étant une quantité de puissance disponible sur ledit bus excédentaire par rapport à la puissance prélevée actuellement depuis ledit bus par lesdits périphériques et à la puissance requise par le bus lui-même ;

un moyen pour recevoir et stocker (100) des informations spécifiant tous les périphériques connectés au dit bus pouvant prélever de la puissance depuis ledit bus, y compris des informations spécifiant la puissance nécessaire pour chaque état de fonctionnement de chaque périphérique ;

un moyen pour recevoir (102) par l'intermédiaire dudit bus des demandes d'utilisation de puissance, lesdites demandes d'utilisation de puissance spécifiant un périphérique demandé et un état de fonctionnement désiré dudit périphérique demandé ; et

un moyen de commande pour déterminer (104) si l'excédent de puissance, s'il y en a, est suffisant pour permettre le fonctionnement dudit périphérique demandé dans ledit état de fonctionnement désiré, et pour autoriser ladite demande d'utilisation de puissance si l'excédent de puissance est suffisant, et refuser ladite demande d'utilisation de puissance si ledit excédent de puissance est insuffisant.

**2.** Le système selon la revendication 1, dans lequel lesdites informations spécifiant la puissance nécessaire pour chaque état de fonctionnement comprennent la puissance nécessaire pour un ou plusieurs états de fonctionnement de chacun de la pluralité desdits périphériques, dans lequel un moyen permettant de conserver des informations relatives à la puissance actuellement prélevée comprend un moyen pour déterminer périodiquement un état de fonctionnement actuel de chaque périphérique.

**3.** Le système selon la revendication 1, dans lequel ledit moyen de commande comprend :

un moyen pour déterminer périodiquement une nouvelle puissance nécessaire totale basée sur l'autorisation de la demande d'utilisation de puissance ;

un moyen pour déterminer si la nouvelle quantité totale de puissance nécessaire dépasse une quantité maximale de puissance disponible ; et

un moyen de négociation de puissance, répondant à une détermination que la nouvelle quantité totale de puissance nécessaire dépasse la quantité maximale de puissance disponible, pour autoriser ou refuser ladite demande d'utilisation de puissance.

4. Le système selon la revendication 3, dans lequel ledit moyen de négociation de puissance comprend un moyen permettant de différer l'activation d'un ou plusieurs desdits périphériques pour lesquels ladite demande d'utilisation de puissance est reçue pour maintenir une nouvelle quantité totale de puissance nécessaire à un niveau ne dépassant pas ladite quantité maximale de puissance disponible.

5. Le système selon la revendication 3, dans lequel ledit moyen de négociation de puissance comprend un moyen permettant d'annuler une autorisation d'utilisation de puissance à un périphérique ayant obtenu une autorisation précédemment, afin d'accorder une autorisation d'utilisation de puissance à un périphérique émettant une demande nouvelle.

6. Le système selon la revendication 3, dans lequel ledit moyen de négociation de puissance comprend un moyen pour activer des périphériques supplémentaires pouvant fournir de la puissance au dit bus, afin d'accroître la quantité totale de puissance disponible.

7. Le système selon la revendication 6, dans lequel ledit moyen pour activer un périphérique supplémentaire comprend un moyen permettant de transmettre des commandes de mise sous tension progressive par l'intermédiaire du bus au dit périphérique inactif.

8. Le système selon la revendication 3, dans lequel au moins un desdits périphériques comprend une capacité d'alimentation par batterie, et dans lequel ledit moyen de négociation de puissance comprend :

un moyen pour activer ladite capacité d'alimentation par batterie dudit périphérique lorsqu'une quantité insuffisante de puissance excédentaire est disponible pour alimenter ledit périphérique avec ladite alimentation par batterie ; et
un moyen pour désactiver ladite capacité d'alimentation par batterie dudit périphérique lorsque ladite quantité de puissance excédentaire est suffisante pour alimenter ledit périphérique.

9. Le système selon la revendication 8, dans lequel ledit périphérique alimenté par batterie délivre une puissance au dit bus à un niveau de tension inférieur à une tension fournie au dit bus par les périphériques non alimentés par batterie, dans lequel ledit périphérique alimenté par batterie délivre une puissance au dit bus lorsque aucun périphérique non alimenté par batterie ne délivre de puissance au dit bus et qui prélève de la puissance depuis ledit bus lorsqu'au moins un périphérique non alimenté par batterie fournit de la puissance au dit bus.

10. Le système selon la revendication 1, comprenant en outre

un moyen de séquencement, répondant à une détermination qu'une quantité insuffisante de puissance excédentaire est disponible, pour différer le fonctionnement dudit périphérique pour lequel une demande d'utilisation de puissance a été reçue jusqu'à une augmentation dudit excédent de puissance.

11. Le système selon la revendication 10, dans lequel ledit moyen de commande, répondant à une détermination qu'une quantité insuffisante de puissance excédentaire est disponible, modifie l'état de fonctionnement d'un périphérique opérationnel à un niveau de puissance nécessaire plus faible pour fournir un excédent de puissance plus important afin de permettre le fonctionnement dudit périphérique pour lequel une demande d'utilisation de puissance a été reçue.

12. Le système selon la revendication 11, dans lequel ledit moyen de commande comprend un moyen pour désactiver un périphérique actif afin de fournir un excédent de puissance plus important.

13. Le système selon la revendication 10, dans lequel ledit bus achemine de la puissance, et ledit système comprend en outre un moyen pour conserver des informations relatives au dit excédent de puissance, s'il y en a, disponible sur ledit bus.

14. Le système selon la revendication 13, dans lequel ledit moyen de commande, répondant à une détermination qu'une quantité insuffisante d'excédent de puissance est disponible, modifie l'état de fonctionnement d'un périphérique opérationnel à un niveau de puissance nécessaire plus faible pour fournir un excédent de puissance plus important afin de permettre le fonctionnement dudit périphérique pour lequel une demande d'utilisation de puissance a été reçue.

**15.** Le système selon la revendication 14, dans lequel ledit moyen de commande comprend un moyen pour désactiver un périphérique actif afin de fournir un excédent de puissance plus important.

**16.** Le système selon la revendication 14, dans lequel ledit moyen de commande comprend :

un moyen pour déterminer périodiquement une nouvelle puissance nécessaire totale basée sur l'autorisation de la demande d'utilisation de puissance ;
un moyen pour déterminer si la nouvelle quantité totale de puissance nécessaire dépasse ladite quantité maximale de puissance disponible ; et
un moyen de négociation de puissance, répondant à une détermination que la nouvelle quantité totale de puissance nécessaire dépasse la quantité maximale de puissance disponible, pour autoriser ou refuser ladite demande d'utilisation de puissance.

**17.** Le système selon la revendication 16, dans lequel ledit moyen de négociation de puissance comprend un moyen pour différer l'activation d'un ou plusieurs desdits périphériques pour lesquels ladite demande d'utilisation de puissance est reçue afin de maintenir la nouvelle quantité totale de puissance nécessaire à un niveau ne dépassant pas ladite quantité maximale de puissance disponible.

**18.** Le système selon la revendication 16, dans lequel ledit moyen de négociation de puissance comprend un moyen pour annuler une autorisation d'utilisation de puissance à un périphérique ayant obtenu l'autorisation précédemment, afin d'accorder une autorisation d'utilisation de puissance à un périphérique émettant une demande nouvelle.

**19.** Le système selon la revendication 16, dans lequel ledit moyen de négociation de puissance comprend un moyen pour activer des périphériques supplémentaires pouvant fournir de la puissance au dit bus, afin d'accroître la quantité totale de puissance disponible.

**20.** Le système selon la revendication 19, dans lequel ledit moyen pour activer un périphérique supplémentaire comprend un moyen permettant de transmettre des commandes de mise sous tension progressive par l'intermédiaire du bus au dit périphérique inactif.

**21.** Un procédé pour gérer la puissance fournie à des périphériques connectés à un bus d'interconnexion de périphériques, dans lequel la puissance est acheminée sur ledit bus, ledit procédé comprenant les étapes consistant à :

recevoir des informations spécifiant une quantité totale de puissance excédentaire, s'il y en a, sur ledit bus,

ledit excédent de puissance étant une quantité de puissance disponible sur ledit bus excédentaire par rapport à la puissance prélevée actuellement depuis ledit bus par lesdits périphériques et à la puissance requise par le bus lui-même ;
recevoir et stocker (100) des informations spécifiant tous les périphériques connectés au dit bus pouvant prélever de la puissance depuis ledit bus, y compris des informations spécifiant la puissance nécessaire pour chaque état de fonctionnement de chaque périphérique ;
recevoir (102) par l'intermédiaire dudit bus des demandes d'utilisation de puissance, lesdites demandes d'utilisation de puissance spécifiant un périphérique demandé et un état de fonctionnement désiré dudit périphérique demandé ;
déterminer (104) si l'excédent de puissance, s'il y en a, est suffisant pour permettre le fonctionnement dudit périphérique demandé dans ledit état de fonctionnement désiré ; et
autoriser ladite demande d'utilisation de puissance si l'excédent de puissance est suffisant, et refuser ladite demande d'utilisation de puissance si ledit excédent de puissance est insuffisant.

**22.** Le procédé selon la revendication 21, dans lequel, si ladite demande d'utilisation de puissance est refusée, le procédé comprend en outre une étape consistant à différer l'autorisation de ladite demande d'utilisation de puissance jusqu'à une augmentation de l'excédent de puissance, s'il y en a, à une quantité suffisante pour alimenter ledit périphérique demandé au dit état de fonctionnement désiré.

**23.** Le procédé selon la revendication 21, dans lequel, si ladite demande d'utilisation de puissance est refusée, le procédé comprend en outre une étape consistant à commander un ou plusieurs périphériques actuellement en fonctionnement pour modifier les états de fonctionnement desdits périphériques en un état nécessitant moins de puissance.

**24.** Le procédé selon la revendication 21, comprenant en outre les étapes consistant à :

recevoir des informations spécifiant la puissance de sortie des périphériques pouvant fournir de la puissance au dit bus ; et
commander lesdits périphériques pouvant fournir de la puissance de façon à activer ou désactiver un ou plusieurs desdits périphériques en réponse à la détermination d'une

**EP 0 680 632 B1**

quantité totale de puissance requise pour autoriser lesdites demandes d'utilisation de puissance.

FIG. 1

POWER LINE

DATA LINE

HOST

BUS MANAGER

POWER MANAGER

DISK DRIVE

VIDEO MONITOR

MOUSE

PRINTER

KEY-BOARD

BATTERY POWERED PORTABLE

OVERVOLTAGE PROTECTION CIRCUIT

EP 0 680 632 B1

POWER UTILIZATION REQUIREMENTS:

DEVICE(1): MOUSE
  STATE(1): STAND-BY - 1 WATT
  STATE(2): ACTIVE  - 2 WATTS
DEVICE (2): PORTABLE WITH BATTERY POWER
  STATE(1): BATTERY OFF - INACTIVE - O WATTS
  STATE(2): BATTERY OFF - ACTIVE  - 3 WATTS
  STATE(3): BATTERY ON - INACTIVE - O WATTS
  STATE(4): BATTERY ON - ACTIVE - O WATTS
       •
       •
       •

— 54

POWER OUTPUT CAPABILITIES:

DEVICE (1):  NONE
DEVICE(2): SOFT POWER CAPABLE
STATE(1): NONE
STATE(2): NONE
STATE(3): 3 WATTS
STATE(4): 1 WATT
       •
       •
       •

— 56

— 56

CURRENT DEVICE STATUS
                         PRIORITY
DEVICE (1): STATE(2)     LOW
DEVICE (2): STATE(3)     HIGH
       •
       •
       •

50          POWER MANAGER DATABASE

# FIG. 2A

POWER MANAGER

INITIALIZATION:
-IDENTIFY ALL DEVICES
-INPUT AND STORE POWER
  REQUIREMENTS AND
  POWER CAPABILITIES                          — 100

RECEIVE POWER USAGE
  REQUEST INCLUDING
  USAGE PRIORITY                              — 102

104 — DETERMINE CURRENT POWER
      SURPLUS

106 — DETERMINE POWER REQUIRED
      TO GRANT REQUEST

                                              110

108 — SUFFICIENT        Y    GRANT
      POWER ?                 REQUEST

            N

  N   POWER INCREASE
      CAPABILITY?                — 109

            Y

      ACTIVATE
      POWER SUPPLY
      DEVICE                    — 112

      ANY CURRENTLY
      ACTIVE DEVICES
      HAVING LOWER
  N   PRIORITY?                 — 114

            Y

      REVOKE POWER USAGE GRANT
      TO LOWER PRIORITY DEVICE    — 115

      DEFER POWER USAGE GRANT
      PENDING COMPLETION OF TASKS
      HAVING HIGHER OR
      EQUAL PRIORITY            — 116

FIG. 2B

FIG. 3

FIG. 4

FIG. 5

FIG. 6

EP 0 680 632 B1

FIG. 7

EP 0 680 632 B1

FIG. 8

FIG. 9

EP 0 680 632 B1

FIG. 10

EP 0 680 632 B1

FIG. 11